Europäisches Patentamt

European Patent Office

Office européen des brevets

(19)

(11) EP 1 475 783 A2

(12) **EUROPEAN PATENT APPLICATION**

(43) Date of publication:
**10.11.2004 Bulletin 2004/46**

(51) Int Cl.[7]: **G11B 5/62**, G11B 5/70, G11B 5/714

(21) Application number: **04010349.1**

(22) Date of filing: **30.04.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **02.05.2003 JP 2003127197**

(71) Applicant: **Fuji Photo Film Co., Ltd.**
**Kanagawa (JP)**

(72) Inventors:
• **Harasawa, Takeshi**
  **Odawara-shi Kanagawa (JP)**
• **Takano, Hiroaki**
  **Odawara-shi Kanagawa (JP)**

(74) Representative: **HOFFMANN - EITLE**
**Patent- und Rechtsanwälte**
**Arabellastrasse 4**
**81925 München (DE)**

(54) **Magnetic recording medium**

(57)    A magnetic recording medium comprising a support and a magnetic layer containing a ferromagnetic powder, wherein the magnetic layer has a volume of magnetic flux revolution of from 3,000 to 15,000 nm$^3$, a thickness of from 0.01 to 0.15 $\mu$m, a squareness ratio in a perpendicular direction of 0.7 or more, and a surface electrical resistance of 10$^8$ $\Omega$/sq or less.

EP 1 475 783 A2

**Description**

## FIELD OF THE INVENTION

The present invention relates to a coating type magnetic recording medium for high density recording.

## BACKGROUND OF THE INVENTION

Magnetic recording media are widely used as recording tapes, video tapes and floppy discs. Magnetic recording media generally comprise a support having laminated thereon a magnetic layer, and in tape-like media (media in the form of a tape), a backing layer is laminated on the side of a support opposite to the side having a magnetic layer, if necessary. In disc-like media (media in the form of a disc), magnetic layers are laminated on both sides of a support.

In general, a magnetic layer of a coating type magnetic recording medium is formed by dispersing ferromagnetic powder in a binder, adding thereto a lubricant, an abrasive and, if necessary, carbon black, and coating on a support.

In recent years, thinning of a magnetic layer is proposed for realizing higher output of a magnetic layer, a magnetic recording medium having an intermediate layer laminated between a support and a magnetic layer is suggested for that purpose.

In a vacuum deposition type magnetic recording medium, a magnetic film is formed on a support by a vacuum deposition method. Magnetic powder is deposited on a metal or alloy comprising cobalt as main component in an oxygen atmosphere and, if necessary, a protective film and a lubricating film are formed on the deposited magnetic film.

To the thus-obtained magnetic recording medium, in an audio tapes for recording and reproducing music, a higher reproducing property of original sound is required, video tapes are required to be excellent in a reproducing property, and backup tapes or discs for computer use are required to be excellent in storage stability and durability, and free of data loss.

For satisfying these various requirements, magnetic recording media have to have excellent electromagnetic characteristics and durability. Various investigations and developments are progressing for that purpose, e.g., the realization of higher coercive force and higher orientation property of magnetic powders, coating techniques of a thin layer, the development of a protective film of a magnetic layer, and the development of lubricants for reducing the friction coefficient of a magnetic layer and a backing layer.

On the other hand, from the side of recording and reproducing apparatus, as means for increasing recording capacity per unit area, it is advancing to make the wavelength of recording frequency short and narrow the track width of magnetic recording heads.

Further, magnetic heads working with electromagnetic induction as the principle of operation (induction type magnetic heads) are approaching their limit for use in the field of higher density recording and reproduction. That is, it is necessary to increase the number of winding of the coil of a reproduction head to obtain larger reproduction output, but the inductance increases when the winding number is increased, and the resistance at high frequency heightens, as a result the reproduction output lowers.

In recent years, reproduction heads that work with MR (magneto-resistance) as the principle of operation are proposed and get to be used in hard discs. As compared with the induction type magnetic disc, several times of reproduction output can be obtained by using MR head. Further, since an induction coil is not used in MR head, noises generated from instruments, e.g., impedance noises, are largely reduced, therefore, it becomes possible to obtain a great S/N ratio by lowering the noise coming from magnetic recording media. In other words, good recording and reproduction can be done and high density recording characteristics can be drastically improved by lessening the noise of magnetic recordingmedia hiding behind the instruments.

The present inventors proposed a disc-like magnetic recordingmedium in JP-A-10-11647 (The term "JP-A" as used herein refers to an "unexamined published Japanese patent application".), which is sufficiently low in noise, great in output by short wavelength, high in a C/N ratio, and capable of high density recording heretofore not experienced. The magnetic recording medium comprises a nonmagnetic support having on at least one side of the support one or more magnetic layers containing ferromagnetic powder dispersed in a binder, wherein the ferromagnetic powder contained in the uppermost layer is hexagonal ferrite, the volume of magnetic flux revolution measured in the in-plane of the uppermost magnetic layer is from $5 \times 10^{-17}$ to $1.5 \times 10^{-17}$ ml, and the magnetic recording medium is (1) a random orientation disc-like magnetic recording medium having the squareness ratio of a coercive force $S^{*1}$ measured in the in-plane of the uppermost magnetic layer of 0.60 or more, or (2) a perpendicular orientation disc-like magnetic recording medium having the squareness ratio of a coercive force $S^{*2}$ measured in the perpendicular direction of the uppermost magnetic layer of 0.9 or more as the diamagnetic correction value, and the squareness ratio SQp of the diamagnetic correction value in the perpendicular direction of 0.75 or more.

However, since the reproduction of the magnetic recording medium disclosed in JP-A-10-11647 is performed with a magnetic induction type head, it is not effective for the reduction of noise in the case where an MR head is used.

## SUMMARY OF THE INVENTION

An object of the present invention is to provide a magnetic recording medium improved in electromagnetic characteristics and particularly suitable for an MR head.

The above object of the present invention can be achieved by a magnetic recording medium comprising a support having provided thereon a magnetic layer containing ferromagnetic powder, wherein the magnetic layer has a volume of magnetic flux revolution of from 3,000 to 15,000 $nm^3$, a thickness of from 0.01 to 0.15 $\mu$m, a squareness ratio in the perpendicular direction of 0.7 or more, and a surface electrical resistance (Rs) of $10^8$ $\Omega$/sq or less.

## DETAILED DESCRIPTION OF THE INVENTION

A magnetic recording medium in the present invention is characterized in that the magnetic layer of the magnetic recording medium has the specific volume of magnetic flux revolution, thickness, squareness ratio SQp in the perpendicular direction and surface electrical resistance (Rs), and the electromagnetic characteristics of the magnetic recording medium can be improved by this structure. The electromagnetic characteristics cannot be improved if at least one of these four conditions is not satisfied.

It is thought that noise cannot be improved if individual magnetic unit as measuredby a volume of magnetic flux revolution is not as small as the range of the present invention, accordingly ferromagnetic powders having corresponding fine particles are used.

A volume of magnetic flux revolution in the invention is from 3,000 to 15,000 $nm^3$, preferably from 3,000 to 10,000 $nm^3$.

As ferromagnetic powders for use in a magnetic recording medium in the invention, well-known ferromagnetic metal powders and hexagonal ferrite powders are used.

The average tabular diameter of hexagonal ferrite magnetic powders is preferably from 20 to 60 nm, more preferably from 25 to 55 nm. The average tabular ratio [the arithmetic mean of (tabular diameter/tabular thickness)] is preferably from 3 to 5. The most effective tabular size in the invention is from 25 to 40 nm.

The average long axis length of ferromagnetic metal powders in the present invention is preferably from 20 to 100 nm, and more preferably from 30 to 70 nm. The average acicular ratio [the arithmetic mean of (long axis length/short axis length)] is preferably from 3 to 8, and more preferably from 4 to 7.

When the particle size of ferromagnetic powders is greater than the above range, noise increases. While when the particle size is smaller than the above range, the effect of the invention cannot be obtained, and it is thought that a further contrived method is necessary for such hyper-fine particles.

A volume of magnetic flux revolution V can be obtained by the following equation.

$$Hc=2K/Ms\{1-[(kT/KV)\ln(At/0.693)]^{1/2}\}$$

wherein Hc: coercive force measured in the in-plane of a magnetic layer, K: anisotropic constant, Ms: saturation magnetization, k: Boltzmann's constant, T: absolute temperature, V: a volume of magnetic flux revolution, A: spin precession frequency, t: magnetic field revolution time

The thickness of a magnetic layer is generally from 0.01 to 0.15 $\mu$m, preferably from 0.05 to 0.1 $\mu$m. The invention is characterized in that the thickness of a magnetic layer is thinner than that in patent literature 1, and when the condition of the thickness is combined with other three conditions, recording magnetism suitable for reproduction with an MR head is formed on the magnetic layer.

A magnetic layer of a magnetic recording medium in the invention may comprise one layer, or may comprise a plurality of layers. In the case of the latter, the thickness of the magnetic layer is the total thickness. It is preferred to provide a nonmagnetic layer containing a binder and nonmagnetic powder between a support and a magnetic layer to improve a surface property and to make it easy to thin the magnetic layer.

A squareness ratio in the perpendicular direction SQp indicates a diamagnetic correction value, this is a value measured from the perpendicular direction to the film surface of a magnetic layer, and SQp is 0.7 or more, preferably 0.8 or more. The upper limit is 1.0 but in practice 0.95 or so. When SQp is less than 0.7, output is low as a perpendicular orientation medium and the advantage of perpendicular orientation cannot be obtained.

Rs is $10^8$ $\Omega$/sq or less, preferably from $10^4$ to $10^6$ $\Omega$/sq. When Rs is greater than $10^8$ $\Omega$/sq, running property deteriorates by the influence of static electricity.

Each element of a magnetic recording medium in the present invention will be described in detail below.

Description on ferromagnetic powder:

As ferromagnetic powders for use in a magnetic layer, ferromagnetic metal powders or hexagonal ferrite powders are preferred.

Description on ferromagnetic metal powder:

Ferromagnetic metal powder preferably comprises Fe as a main component and Co, Ni, Mn, Zn or Nd as an alloy component. In particular, an Fe-Co alloy is known as a substance capable of obtaining high coercive force Hc.

Ferromagnetic metal powder has saturation magnetization $\sigma_s$ of generally from 80 to 140 A·m$^2$/kg, preferably from 90 to 130 A·m$^2$/kg, and Hc of generally from 120 to 360 kA/m, preferably from 158 to 350 kA/m.

Description on hexagonal ferrite powder:

The examples of hexagonal ferrite powders include barium ferrite, strontium ferrite, lead ferrite, calcium ferrite, and Co substitution products of these ferrites. Specifically, magnetoplumbite type barium ferrite and strontium ferrite, magnetoplumbite type ferrites having covered the particle surfaces with spinel, and magnetoplumbite type barium ferrite and strontium ferrite partially containing spinel phase are exemplified. Hexagonal ferrite powders may contain, in addition to the prescribed atoms, the following atoms, e.g., Al, Si, S, Sc, Ti, V, Cr, Cu, Y, Mo, Rh, Pd, Ag, Sn, Sb, Te, Ba, Ta, W, Re, Au, Hg, Pb, Bi, La, Ce, Pr, Nd, P, Co, Mn, Zn, Ni, Sr, B, Ge and Nb. In general, hexagonal ferrite powders containing the following elements can be used, e.g., Co-Ti, Co-Ti-Zr, Co-Ti-Zn, Ni-Ti-Zn, Nb-Zn-Co, Sb-Zn-Co and Nb-Zn. According to starting materials and producing methods , specific impurities may be contained.

Hexagonal ferrite particles show a specific surface area ($S_{BET}$) measured by a BET method of from 30 to 90 m$^2$/g. A specific surface area nearly coincides with the value obtained by arithmetic operation from a tabular diameter and a tabular thickness. The crystallite size of hexagonal ferrite powders is from 50 to 450 Å, preferably from 100 to 350 Å. The distributions of tabular diameter and tabular thickness are generally preferably as narrow as possible. Distributions in numerical values can be compared by the measurement of TEM photographs of 500 particles selected randomly. Distribution is in many cases not regular distribution, but when expressed as the standard deviation to the average tabular diameter by computation, σ/average tabular diameter is from 0.1 to 2.0. For obtaining narrowparticle size distribution, it is efficient to make a particle-forming reaction system homogeneous to the utmost, and particles formed are subjected to distribution-improving treatment as well. For example, a method of selectively dissolving hyper-fine particles in an acid solution is also known. Coercive force (Hc) measured in magnetic powders of from 500 to 5,000 Oe (from 40 to 400 kA/m) or so can be produced. Higher Hc is advantageous for high density recording but coercive force is restricted by the capacities of recording heads. Hc of hexagonal ferrite powders is generally from 800 to 4,000 Oe (from 64 to 320 kA/m) or so, preferably from 1,500 to 3,500 Oe (from 120 to 280 kA/m) . When saturation magnet-ization $\sigma_s$ of heads is more than 1.4 tesla, Hc is preferably 2,000 Oe (160 320 kA/m) or more. Hc can be controlled by the particle sizes (tabular diameter tabular thickness), the kinds and the amounts of the elements contained, the substitution sites of the elements, and particle-forming reaction conditions. Saturation magnetization $\sigma_s$ is preferably higher but it has an inclination of becoming smaller as particles become finer. For improving $\sigma_s$, it is well known tomake composite of magnetoplumbite ferrite with spinel ferrite, to select the kinds and the amounts of the elements to be contained, or to use W type hexagonal ferrite. When magnetic powders are dispersed, the particle surfaces of the magnetic powders may be treated with substances compatible with the dispersion media and the binders. Inorganic and organic compounds are used as the surface treating materials. For example, oxides or hydroxides of Si, Al and P, and various kinds of silane coupling agents and titanium coupling agents are typical examples of the surface treating materials. The amount of these compounds is from 0.1 to 10% of the magnetic powder. The pH of magnetic powders is also important for dispersion. The pH is generally from 4 to 12 or so. The optimal value is dependent upon the dispersionmedium and the binder. Taking the chemical stability and the storage property of a magnetic recording medium into consideration, pH of from 6 to 10 or so is selected. Themoisture content in magnetic powder also affects dispersion. The optimal moisture content is dependent upon the dispersion medium and the binder, but is generally from 0.01 to 2.0%.

The producing methods of hexagonal ferrite include the following methods and any of these methods can be used in the invention.

(1) A glass crystallization method of blending barium oxide, iron oxide, metallic oxide substituting iron, and boron oxide as glass-forming material so as to make a desired ferrite composition, melting and suddenly cooling the composition to obtain an amorphous product, treating the obtained product by heating again, washing andpulverizing, to thereby obtain barium ferrite crystal powder;

(2) A hydrothermal reaction of neutralizing a solution of metal salt of barium ferrite composition with an alkali, removing the byproducts, liquid phase heating the product at 100°C or more, washing, drying and pulverizing, to thereby obtain barium ferrite crystal powder; and

(3) A coprecipitation method of neutralizing a solution of metal salt of barium ferrite composition with an alkali, removing the byproducts, drying the product, treating at 1,100°C or less, and pulverizing, to thereby obtain barium ferrite crystal powder.

Description on nonmagnetic layer:

When a nonmagnetic layer is provided between a support and a magnetic layer, the nonmagnetic layer (hereinafter also referred to as "lower layer") fundamentally comprises a binder and nonmagnetic powder. A nonmagnetic layer is described in detail below. Nonmagnetic powders for use in a nonmagnetic layer in the invention mainly comprise nonmagnetic inorganic powders. Carbon blacks are also included in nonmagnetic powders but carbon blacks are placed under a category different from nonmagnetic inorganic powders here. Nonmagnetic inorganic powders are selected from inorganic compounds, e.g., metallic oxide, metallic carbonate, metallic sulfate, metallic nitride, metallic carbide andmetallic sulfide. The inorganic compounds are selected from the following compounds and they can be used alone or in combination, e.g., $\alpha$-alumina having an $\alpha$-conversion rate of 90% or more, $\beta$-alumina, $\gamma$-alumina, $\theta$-alumina, silicon carbide, chromium oxide, cerium oxide, $\alpha$-iron oxide, goethite, corundum, silicon nitride, titanium carbide, titanium oxide, silicon dioxide, tin oxide, magnesium oxide, tungsten oxide, zirconium oxide, boron nitride, zinc oxide, calcium carbonate, calcium sulfate, barium sulfate and molybdenum disulfide. Of these compounds, titanium dioxide, zinc oxide, iron oxide and barium sulfate are particularly preferred for the reason that they have small particle size distribution and various means for imparting functions, and titanium dioxide and $\alpha$-iron oxide are more preferred. These nonmagnetic inorganic powders preferably have a particle size of from 0.005 to 2 $\mu$m. If necessary, a plurality of nonmagnetic inorganic powders each having a different particle size may be combined, or a single nonmagnetic inorganic powder may have broad particle size distribution so as to attain the same effect as such a combination. Nonmagnetic inorganic powders particularly preferably have a particle size of from 0.01 to 0.2 $\mu$m. In particular, when nonmagnetic inorganic powder is a granular metallic oxide, the average particle size of the powder is preferably 0.08 $\mu$m or less, and when the nonmagnetic inorganic powder is an acicular metallic oxide, the long axis length of the powder is preferably 0.3 pm or less. Nonmagnetic inorganic powders for use in the invention have a tap density of generally from 0.05 to 2 g/ml, preferably from 0.2 to 1.5 g/ml; a moisture content of generally from 0.1 to 5 mass% (weight %), preferably from 0.2 to 3 mass%, andmore preferably from 0.3 to 1. 5 mass%; a pH value of generally from 2 to 11, and particularly preferably between 5.5 and 10; a specific surface area $S_{BET}$ of generally from 1 to 100 $m^2$/g, preferably from 5 to 80 $m^2$/g, and more preferably from 10 to 70 $m^2$/g; a crystallite size of preferably from 0.004 to 1 $\mu$m, and more preferably from 0.04 to 0.1 $\mu$m; an oil absorption amount using DBP (dibutyl phthalate) of generally from 5 to 100 ml/100 g, preferably from 10 to 80 ml/100 g, and more preferably from 20 to 60 ml/100 g; and a specific gravity of generally from 1 to 12, and preferably from 3 to 6. The configuration of nonmagnetic inorganic powders may be any of an acicular, spherical, polyhedral and tabular configurations.

Ignition loss is preferably 20 mass% or less, and most preferably substantially zero. Nonmagnetic inorganic powders for use in the invention preferably have Mohs' hardness of from 4 to 10. The roughness factor of particle surfaces of nonmagnetic inorganic powders is preferably from 0.8 to 1.5, more preferably from 0.9 to 1.2. The adsorption amount of SA (stearic acid) of nonmagnetic inorganic powders is generally from 1 to 20 $\mu$mol/$m^2$, preferably from 2 to 15 $\mu$mol/$m^2$, and more preferably from 3 to 8 $\mu$mol/$m^2$. Heat of wetting in water of nonmagnetic inorganic powders at 25°C is preferably from 200 to 600 erg/$cm^2$ (from 0.2 to 0.6 J/$m^2$). Solvents showing heat of wetting in this range can be used. The pH value of nonmagnetic inorganic powders is preferably from 3 to 6. The content of water-soluble Na in nonmagnetic inorganic powders is from 0 to 150 ppm and water-soluble Ca is from 0 to 50 ppm.

The surfaces of nonmagnetic inorganic powders are preferably covered with $Al_2O_3$, $SiO_2$, $TiO_2$, $ZrO_2$, $SnO_2$, $Sb_2O_3$, ZnO or $Y_2O_3$. $Al_2O_3$, $SiO_2$, $TiO_2$ and $ZrO_2$ are particularly preferred in dispersibility, and $Al_2O_3$, $SiO_2$ and $ZrO_2$ are still more preferred. They can be used in combination or can be used alone. According to purposes, a layer subjected to surface treatment by coprecipitation may be used. Alternatively, surfaces of particles may be covered with alumina previously, and then the alumina-covered surface may be covered with silica, or vice versa, according to purposes. A surface-covered layer may be a porous layer, if necessary, but a homogeneous and dense surface is generally preferred.

The specific examples of nonmagnetic inorganic powders for use in a nonmagnetic layer in the invention include Nanotite (manufactured by SHOWA DENKO K.K.), HIT-100 and ZA-G1 (manufactured by Sumitomo Chemical Co., Ltd.), $\alpha$-hematite DPN-250, DPN-250BX, DPN-245, DPN-270BX, DBN-SA1 and DBN-SA3 (manufactured by TODA KOGYO CORP.), titanium oxide TTO-51B, TTO-55A, TTO-55B, TTO-55C, TTO-55S, TTO-55D, SN-100, $\alpha$-hematite E270, E271, E300 and E303 (manufactured by ISHIHARA SANGYO KAISHA, LTD.), titanium oxide STT-4D, STT-30D, STT-30, STT-65C, and $\alpha$-hematite $\alpha$-40 (manufactured by TITAN KOGYO KABUSHIKI KAISHA), MT-100S, MT-100T, MT-150W, MT-500B, MT-600B, MT-100F and MT-500HD (manufactured by TAYCA CORPORATION), FINEX-25, BF-1, BF-10, BF-20 and ST-M (manufactured by SAKAI CHEMICAL INDUSTRY CO., LTD.), DEFIC-Y andDEFIC-R (manufactured by Dowa Mining Co., Ltd.), AS2BM and $TiO_2$ P25 (manufactured by Nippon Aerosil), and 100A, 500A and calcined products of 100A and 500A (manufactured by UBE INDUSTRIES, Ltd.).

Particularly preferred nonmagnetic inorganic powders are titanium dioxide and $\alpha$-iron oxide. The manufacture of $\alpha$-iron oxide (hematite) is performed under the following conditions. That is, $\alpha$-$Fe_2O_3$ powders for use in the present invention are manufactured with acicular goethite particles obtained by any of the following methods as precursor particles. (1) A method in which an aqueous alkali hydroxide solution is added to an aqueous ferrous salt solution in an equivalent or more amount to therebyprepare a suspension havingpH of 11 ormore containing ferrous hydroxide colloid, and then oxygen-containing gas is introduced to the suspension obtained at 80°C or less to form acicular goethite particles by the oxidation reaction of ferrous ions; (2) a method in which an aqueous ferrous salt solution is reacted with an aqueous alkali carbonate solution to thereby prepare a suspension containing $FeCO_3$, and then oxygen-containing gas is introduced to the suspension obtained to form spindle-like goethite particles by the oxidation reaction of ferrous ions; (3) a method in which an aqueous alkali hydroxide solution or an aqueous alkali carbonate solution is added to an aqueous ferrous salt solution in an amount less than equivalent, thereby an aqueous ferrous salt solution containing ferrous hydroxide colloid is prepared, and then oxygen-containing gas is introduced to the aqueous ferrous salt solution obtained to form acicular goethite nucleus particles by the oxidation reaction of ferrous ions, thereafter an aqueous alkali hydroxide solution is added to the aqueous ferrous salt solution containing the acicular goethite nucleus particles in an amount equivalent or more based on $Fe^{2+}$ in the aqueous ferrous salt solution, and then again oxygen-containing gas is introduced to the aqueous ferrous salt solution to grow the acicular goethite nucleus particles; and (4) a method in which an aqueous alkali hydroxide solution or an aqueous alkali carbonate solution is added to an aqueous ferrous salt solution in an amount less than equivalent, thereby an aqueous ferrous salt solution containing ferrous hydroxide colloid is prepared, and then oxygen-containing gas is introduced to the aqueous ferrous salt solution obtained to form acicular goethite nucleus particles by the oxidation reaction of ferrous ions, thereafter the acicular goethite nucleus particles are grown in an acidic or neutral region.

Further, different kinds of elements such as Ni, Zn, P or Si, which are generally added to the reaction solution in a goethite particle-forming reaction for improving the properties of the powder, may be added. Acicular $\alpha$-$Fe_2O_3$ particles can be obtained by dehydrating acicular goethite particles, which are precursor particles, in the range of from 200 to 500°C and further, if necessary, annealing the particles by heat treatment at 350 to 800°C. A sintering inhibitor, e.g., P, Si, B, Zr or Sb may be adhered to the surface of the acicular goethite particles to be dehydrated or annealed. The reason why annealing by heat treatment at 350 to 800°C is performed is that it is preferred to fill the voids which have occurred on the surface of acicular $\alpha$-$Fe_2O_3$ particles obtained by dehydration by melting the extreme surfaces of particles by annealing to obtain smooth surfaces.

$\alpha$-$Fe_2O_3$ powders for use in the invention can be obtained by dispersing acicular $\alpha$-$Fe_2O_3$ particles obtainedby dehydration or annealing in an aqueous solution to make a suspension, adding an Al compound to the suspension to adjust pH and covering the surfaces of the acicular $\alpha$-$Fe_2O_3$ particles with the Al compound, and then subjecting the surface-treated acicular $\alpha$-$Fe_2O_3$ particles to the processes of filtering, washing, drying, pulverizing and, if necessary, performing other treatments, e.g., deaeration, compaction and the like. Aluminum salts, e.g., aluminum acetate, aluminum sulfate, aluminum chloride and aluminum nitrate, and aluminic acid alkali salts, e.g., sodium aluminate, can be used as the aluminum compounds. The addition amount of the Al compound is from 0.01 o 50 mass% in terms of Al based on the $\alpha$-$Fe_2O_3$ particles. When the addition amount is less than 0.01 mass%, the dispersion in the binder resin is insufficient and when the amount exceeds 50 mass%, the Al compound suspending around surfaces of particles unfavorably interact with each other. The nonmagnetic powder used in a lower layer in the invention may be covered with one or two or more compounds selected from P, Ti, Mn, Ni, Zn, Zr, Sn and Sb, as well as Si compound, together with Al compound. The addition amounts of these compounds used with Al compound are respectively from 0.01 to 10 mass% based on $\alpha$-$Fe_2O_3$ particles. When the amount is less than 0.01 mass%, the effect of dispersibility by the addition can be hardly expected, and when the amount exceeds 50 mass%, the Al compound suspending around other than surfaces of particles unfavorably interact with each other.

Titanium dioxide is manufactured by the following method. The manufacturing method of titanium oxide mainly comprises a sulfuric acid process and a chlorine process. A sulfuric acid process comprises digesting raw ores of ilmenite with sulfuric acid and extracting Ti and Fe as sulfate. Iron sulfate is removed off by crystallization separation, the remaining titanyl sulfate solution is purified by filtration, moisture-containing titanium oxide is precipitated by thermal hydrolysis, the precipitated product is filtered and washed, impurities are removed by washing, and then a particle size-adjusting agent is added and calcined at 80 to 1,000°C, thereby a crude titanium oxide is obtained. A rutile type and an anatase type are separated by the kind of nucleating agent added at hydrolysis. This crude titanium oxide is pulverized, graded, and surface treated, thus titanium oxide is obtained. In a chlorine process , a natural rutile and a synthetic rutile are used as raw ores. Ores are chlorinated in a high temperature reduction state, Ti becomes $TiCl_4$ and Fe becomes $FeCl_2$, and the iron oxide solidified by cooling is separated from the liquid $TiCl_4$. The crude $TiCl_4$ obtained is purified by fraction, and then a nucleating agent is added thereto and reacted with oxygen instantaneously at 1,000°C or more, thereby a crude titanium oxide is obtained. The finishing method for imparting to the crude titanium oxide formed in the oxidation decomposition process the property of the pigment is the same as in the sulfuric acid process.

After the above titanium oxide material is dry-ground, water and a dispersant are added, particles are wet-ground, and coarse particles are classified by means of a centrifugal separator. Fine particle slurry is then put in a surface treatment tank and surface covering with metallic hydroxide is carried out here. In the first place, a predetermined amount of an aqueous solution of salt e.g., Al, Si, Ti, Zr, Sb, Sn or Zn, is added to the slurry, an acid or an alkali for neutralization is added thereto, and surfaces of titanium oxide particles are covered with the moisture-containing oxide produced. The water-soluble salts by produced are removed by decantation, filtration andwashing, pH of the slurry is adjusted finally and filtered, and washed with water. The washed cake is dried with a spray drier or a band drier. In the last place, the dried product is ground by a jet mill, and a product is obtained.

Besides the water system, it is also possible to perform surface treatment by introducing $AlCl_3$ and $SiCl_4$ vapor to the titanium oxide powder, and then flowing water vapor to perform surface treatment with Al and Si. With respect to the manufacturingmethods of other pigments, G.D. Parfitt and K.S.W. Sing, Characterization of Powder Surfaces, Academic Press (1976) can be referred to. A desired micro Vickers hardness can be obtained by adding carbon blacks to a nonmagnetic layer, surface electrical resistance (Rs) and light transmittance can be reduced as well, which are well-known effects. It is also possible to bring about the effect of stocking a lubricant by adding carbon blacks to a lower layer. Furnace blacks for rubbers, thermal blacks for rubbers, carbon blacks for coloring and acetylene blacks can be used as carbon blacks. Carbon blacks for use in a lower layer should optimize the following characteristics by the desired effects and further effects can be obtained by the combined use in some cases.

Carbon blacks used in a lower layer in the invention have a specific surface area of from 100 to 500 $m^2/g$, preferably from 150 to 400 $m^2/g$, a DBP oil absorption amount of generally from 20 to 400 ml/100 g, preferably from 30 to 200 ml/100 g, a particle size of generally from 5 to 80 nm, preferably from 10 to 50 nm, and more preferably from 10 to 40 nm, a pH value of from 2 to 10, a moisture content of from 0.1 to 10%, and a tap density of preferably from 0.1 to 1 g/ml. The specific examples of carbon blacks for use in the invention include BLACKPEARLS 2000, 1300, 1000, 900, 800, 880 and 700, and VULCAN XC-72 (manufactured by Cabot Co., Ltd.), #3050B, #3150B, #3250B, #3750B, #3950B, #950, #650B, #970B, #850B, MA-600, MA-230, #4000 and #4010 (manufactured by Mitsubishi Kasei Corp.) , CONDUCTEX SC, RAVEN 8800, 8000, 7000, 5750, 5250, 3500, 2100, 2000, 1800, 1500, 1255 (manufactured by Columbia Carbon Co., Ltd.), and Ketjen Black EC (manufactured by Akzo Co., Ltd.). Carbon blacks may be in advance surface-treated with a dispersant, may be grafted with a resin, or a part of the surface may be graphitized before use. Carbon blacks may be previously dispersed in a binder before addition to a coating solution. Carbon blacks can be used within the range not exceeding 50 mass% of the nonmagnetic inorganic powders and not exceeding 40% of the total mass of the nonmagnetic layer. Carbon blacks can be used alone or in combination. With respect to carbon blacks for use in the invention, Carbon Black Binran (Handbook of Carbon Blacks) (edited by Carbon Black Association) can be referred to.

Organic powders can be used in a nonmagnetic layer according to purpose, e.g., acrylic styrene resin powders, benzoguanamine resin powders, melamine resin powders and phthalocyanine pigments are exemplified. In addition, polyolefin resin powders, polyester resin powders, polyamide resin powders, polyimide resin powders and polyethylene fluoride resin powders can also be used. The producing methods of these organic powders are disclosed in JP-A-62-18564 and JP-A-60-255827.

The binder resins, lubricants, dispersants, additives, solvents, dispersing methods and others used in a magnetic layer described later can be used in a nonmagnetic. In particular, with respect to the amounts and the kinds of binder resins, additives, the amounts and the kinds of dispersants, well-known techniques regarding a magnetic layer can be applied to a nonmagnetic layer.

Description on binder:

Conventionally well-known thermoplastic resins, thermosetting resins, reactive resins and the mixtures of these resins are used as a binder in the invention.

Thermoplastic resins having a glass transition temperature of from -100 to 150°C, a number average molecular weight Mn of from 1,000 to 200,000, preferably from 10,000 to 100,000, and a polymerization degree of from about 50 to about 1,000 can be used in the invention. Hexagonal ferrite fine particles are preferably low in polymerization degree (250 or less) for heightening dispersibility, particularly preferably from 100 to 200. The examples of these thermoplastic resins include polymers or copolymers containing, as the constituting unit, vinyl chloride, vinyl acetate, vinyl alcohol, maleic acid, acrylic acid, acrylic ester, vinylidene chloride, acrylonitrile, methacrylic acid, methacrylic ester, styrene, butadiene, ethylene, vinyl butyral, vinyl acetal or vinyl ether; polyurethane resins and various rubber resins. The examples of thermosetting resins and reactive resins include phenolic resins, epoxy resins, curable type polyurethane resins, urea resins, melamine resins, alkyd resins, acrylic reactive resins, formaldehyde resins, silicone resins, epoxy-polyamide resins, mixtures of polyester resins and isocyanate prepolymers, mixtures of polyesterpolyol and polyisocyanate, and mixtures of polyurethane andpolyisocyanate. These resins are described in detail in <u>Plastic Handbook,</u> Asakura Shoten. It is also possible to use well-known electron beam-curable type resins in each layer. The examples of these resins and manufacturing methods are disclosed in detail in JP-A-62-256219. These resins can be used alone or in combination. The examples of preferred combinations include at least one resin selected from vinyl chloride resins, vinyl chloride-vinyl acetate copolymers, vinyl chloride-vinyl acetate-vinyl alcohol copolymers, and vinyl chloride-vinyl acetate-maleic anhydride copolymers with a polyurethane resin, and combinations of these resins with polyisocyanate.

Polyurethane resins having well known structures, e.g., polyester polyurethane, polyether polyurethane, polyether polyester polyurethane,polycarbonate polyurethane,polyester polycarbonate polyurethane and polycaprolactone polyurethane can be used. For the purpose of obtaining further excellent dispersibility and durability, it is preferred to use at least one polar group selected from the following introduced by copolymerization or addition reaction according to necessity, with respect to all the binders described above, e.g. , -COOM, - $SO_3M$, -$OSO_3M$, -$P=O(OM)_2$, -O-P=O $(OM)_2$ (wherein M represents a hydrogen atom or an alkali metal salt group), -OH, -$NR_2$, -$N^+R_3$ (wherein R represents a hydrocarbon group), an epoxy group, - SH and -CN. The content of the polar group is from $10^{-1}$ to $10^{-8}$ mol/g, preferably from $10^{-2}$ to $10^{-6}$ mol/g.

The specific examples of binders for use in the invention include VAGH, VYHH, VMCH, VAGF, VAGD, VROH, VYES, VYNC, VMCC, XYHL, XYSG, PKHH, PKHJ, PKHC and PKFE (manufactured by Union Carbide Co., Ltd.), MPR-TA, MPR-TA5, MPR-TAL, MPR-TSN, MPR-TMF, MPR-TS, MPR-TM and MPR-TAO (manufactured by Nisshin Chemical Industry Co., Ltd.), 1000W, DX80, DX81, DX82, DX83 and 100FD (manufactured by Electro Chemical Industry Co., Ltd.), MR-104, MR-105, MR-110, MR-100, MR-555 and 400X-110A (manufactured by Nippon Zeon Co., Ltd.); Nippollan N2301, N2302 and N2304 (manufactured by Nippon Polyurethane Co., Ltd.), Pandex T-5105, T-R3080, T-5201, Burnock D-400, D-210-80, Crisvon 6109 and 7209 (manufacturedby Dainippon Ink and Chemicals Inc.), Vylon UR8200, UR8300, UR8700, RV530 and RV280 (manufactured by Toyobo Co., Ltd.), Daipheramine 4020, 5020, 5100, 5300, 9020, 9022 and 7020 (manufactured by Dainichiseika Color & Chemicals Mfg. Co. , Ltd.), MX5004 (manufactured by Mitsubishi Kasei Corp.), Sunprene SP-150 (manufactured by Sanyo Chemical Industries, Ltd.), and Saran F310 and F210 (manufactured by Asahi Kasei Corporation). Of these binders, MR555, MR110, UR8200 and UR8700 are preferred.

The amount of binders for use in a nonmagnetic layer and a magnetic layer is from 5 to 50 mass%, preferably from 10 to 30 mass%, respectively based on the nonmagnetic powder and the magnetic powder. When vinyl chloride resins are used, the amount is from 5 to 30 mass%, when polyurethane resins are used, the amount is from 2 to 20 mass%, and it is preferred to use polyisocyanate in an amount of from 2 to 20 mass% in combination with these resins, however, for instance, when the corrosion of heads is caused by a slight amount of chlorine due to dechlorination, it is possible to use polyurethane alone or a combination of polyurethane and isocyanate alone. When polyurethane is used in the invention, the polyurethane has a glass transition temperature of generally from -50 to 150°C, preferably from 0 to 100°C, breaking extension of from 100 to 2,000%, breaking stress of generally from 0.05 to 10 kg/mm$^2$ (from 0.49 to 98 MPa), and a yielding point of from 0.05 to 10 kg/mm$^2$ (from 0.49 to 98 MPa).

A magnetic recording medium in the present invention may comprise two ormore layers. Accordingly, the amount of a binder, the amounts of vinyl chloride resins, polyurethane resins, polyisocyanate or other resins contained in a binder, the molecular weight of each resin constituting a magnetic layer, the amount of polar groups, or the above described physical properties of resins can of course be varied in a nonmagnetic layer and each magnetic layer according to necessity. These factors should be rather optimized in each layer, and well-known prior techniques regarding multilayer magnetic layers can be used in the invention. For instance, when the amount of a binder is varied in each layer, it is effective to increase the amount of a binder contained in a magnetic layer for the purpose of decreasing scratches on the magnetic layer surface. For improving the head touch against the head, it is effective to increase the amount of the binder in a nonmagnetic layer to impart flexibility.

The examples of polyisocyanates for use in the invention include isocyanates, e.g., tolylenediisocyanate, 4,4'-diphenylmethanediisocyanate, hexamethylenediisocyanate, xylylenediisocyanate, naphthylene-1,5-diisocyanate, o-toluidinediisocyanate, isophoronediisocyanate and triphenylmethanetriisocyanate; products of these isocyanates with polyalcohols; and polyisocyanates formed by condensation reaction of isocyanates. These isocyanates are commercially available under the trade names of Coronate L, Coronate HL, Coronate 2030 , Coronate 2031, Millionate MR and Millionate MTL (manufactured by Nippon Polyurethane Co., Ltd.), TakenateD-102, Takenate D-110N, Takenate D-200 and Takenate D-202 (manufactured by Takeda Chemical Industries, Ltd.), and Desmodur L, Desmodur IL, Desmodur N and Desmodur HL (manufactured by Sumitomo Bayer Co., Ltd.). These compounds may be used alone, or in combination of two or more in each layer taking advantage of the difference in curing reactivity.

Description on carbon black and abrasive:

Carbon blacks for use in a magnetic layer in the present invention include furnace blacks for rubbers, thermal blacks for rubbers, carbon blacks for coloring, and acetylene blacks. Carbon blacks for use in the present invention have a specific surface area of from 5 to 500 m$^2$/g, a DBP oil absorption amount of from 10 to 400 ml/100 g, an average particle size of from 5 to 300 nm, a pH value of from 2 to 10, a moisture content of from 0.1 to 10%, and a tap density of from 0.1 to 1 g/ml. The specific examples of carbon blacks for use in the invention include BLACKPEARLS 2000, 1300, 1000, 900, 905, 800 and 700, and VULCAN XC-72 (manufactured by Cabot Co., Ltd.), #80, #60, #55, #50 and #35 (manufactured by ASAHI CARBON CO., LTD.),

#2400B, #2300, #900, #1000, #30, #40 and #10B (manufactured by Mitsubishi Kasei Corp. ) , CONDUCTEX SC, RAVEN 150, 50, 40, 15, and RAVEN-MT-P (manufactured by Columbia Carbon Co., Ltd.), and Ketjen Black EC (manufactured by Nippon EC Co., Ltd.). Carbon blacks may be in advance surface-treated with dispersants, may be grafted with resins, or a part of the surface may be graphitized before use. Carbon blacks may be previously dispersed in a binder before addition to a coating solution. Carbon blacks can be used alone or in combination. It is preferred to use carbon blacks in an amount of from 0.1 to 30 mass% based on the amount of the magnetic powder. Carbon blacks can serve various functions such as preventing the static charge and reducing the friction coefficient of a magnetic layer, imparting a light-shielding property to a magnetic layer, and improving the film strength of a magnetic layer. Such functions vary by the kind of the carbon black to be used. Accordingly, it is of course possible in the invention to select and determine the kinds, amounts and combinations of carbon blacks to be added to a magnetic layer and a nonmagnetic layer, on the basis of the above-described various properties such as the particle size, the oil absorption amount, the electrical conductance and the pH value, or these should be rather optimized in each layer. With respect to carbon blacks for use in the invention, Carbon Black Binran (Handbook of Carbon Blacks) (edited by Carbon Black Association) can be referred to.

As abrasives for use in the invention, well-known materials essentially having a Mohs' hardness of 6 or more may be used alone or in combination, e.g., α-alumina having an α-conversion rate of 90% or more, β-alumina, silicon carbide, chromium oxide, cerium oxide, α-iron oxide, corundum, artificial diamond, silicon nitride, silicon carbide, titanium carbide, titanium oxide, silicon dioxide and boron nitride. Composites composed of these abrasives (abrasives obtained by surface-treating with other abrasives) may also be used. Compounds or elements other than the main component are often contained in abrasives, but the intended effect can be achieved so long as the content of the main component is 90% or more. Abrasives preferably have a particle size of from 0.01 to 2 μm. In particular, for improving electromagnetic characteristics, abrasives having narrow particle size distribution are preferably used. For improving durability, a plurality of abrasives each having a different particle size may be combined according to necessity, or a single abrasive having broad particle size distribution may be used so as to attain the same effect as such a combination. Abrasives for use in the invention preferably have a tap density of from 0.3 to 2 g/ml, a moisture content of from 0.1 to 5%, a pH value of from 2 to 11, and a specific surface area of from 1 to 30 m$^2$/g. The configuration of abrasives for use in the invention may be any of acicular, spherical and die-like configurations. Abrasives having a configuration partly with edges are preferred for their high abrasive property. The specific examples of abrasives for use in the invention include AKP-12 , AKP-15, AKP-20 , AKP-30, AKP-50, HIT-20, HIT-30, HIT-55, HIT-60, HIT-70, HIT-80 and HIT-100 (manufactured by Sumitomo Chemical Co., Ltd.), ERC-DBM, HP-DBM and HPS-DMB (manufactured by Reynolds International Inc.) , WA10000 (manufactured by Fujimi Kenmazai K.K.), UB20 (manufactured by C. Uyemura & Co., Ltd.), G-5, Chromex U2 and Chromex U1 (manufactured by Nippon Chemical Industrial CO. LTD.), TF100 and TF140 (manufactured by TODA KOGYO CORP.), β-Random Ultrafine (manufactured by Ividen Co., Ltd.), and B-3 (manufactured by Showa Mining Co., Ltd.). Abrasives can also be added to a nonmagnetic layer, if necessary. By adding abrasives to a nonmagnetic layer, it is possible to control the surface configuration or the state of spines of abrasives. The particle size and the amount of abrasives to be added to a magnetic layer and a nonmagnetic layer have to be selected at optimal values.

Description on additives:

As additives for use in a magnetic layer and a nonmagnetic layer in the invention, those having a lubricating effect, an antistatic effect, a dispersing effect and aplasticizing effect are used. The examples of additives which can be used in the invention include molybdenum disulfide, tungsten disulfide, graphite, boron nitride, graphite fluoride, silicone oil, polar group-containing silicone, fatty acid-modified silicone, fluorine-containing silicone, fluorine-containing alcohol, fluorine-containing ester, polyolefin, polyglycol, alkylphosphoric ester andalkali metal salt of it, alkylsulfuric ester and alkali metal salt of it, polyphenyl ether, phenylphosphonic acid, aminoguinones, various kinds of silane coupling agents,titanium coupling agents,fluorine-containing alkylsulfuric ester and alkali metal salt of it, monobasic fatty acid having from 10 to 24 carbon atoms, and metal salt of it (e.g., with Li, Na, K or Cu), mono-, di-, tri-, tetra-, penta- or hexa-alcohol having from 12 to 22 carbon, alkoxy alcohol having from 12 to 22 carbon atoms, mono-fatty acid ester, di-fatty acid ester or tri-fatty acid ester comprising a monobasic fatty acid having from 10 to 24 carbon atoms and any one of mono-, di-, tri-, tetra-, penta- or hexa-alcohol having from 2 to 12 carbon atoms, fatty acid ester of monoalkyl ether of alkylene oxide polymer, fatty acid amide having from 8 to 22 carbon atoms, and aliphatic amine having from 8 to 22 carbon atoms. These compounds may contain an unsaturated bond or may be branched.

The specific examples of fatty acids include capric acid, caprylic acid, lauric acid, myristic acid, palmitic acid, stearic acid, behenic acid, oleic acid, elaidic acid, linoleic acid, linolenic acid and isostearic acid. The examples of esters include butyl stearate, octyl stearate, amyl stearate, isooctyl stearate, butyl myristate, octyl myristate, butoxyethyl stearate, butoxydiethyl stearate, 2-ethylhexyl stearate, 2-octyldodecylpalmitate, 2-hexyldodecylpalmitate, isohexadecyl stearate, oleyl oleate, dodecyl stearate, and tridecyl stearate, and the examples of alcohols include oleyl alcohol, stearyl alcohol and lauryl alcohol. In addition to the above compounds, nonionic surfactants , e.g., alkylene oxide, glycerol, glycidol and alkylphenol-ethylene oxide adducts; cationic surfactants, e.g., cyclic amine, ester amide, quaternary ammonium salts, hydantoin derivatives, heterocyclic rings, phosphoniums and sulfoniums; anionic surfactants containing an acid group such as a carboxylic acid, a sulfonic acid, a phosphoric acid, a sulfuric ester group or a phosphoric ester group; and amphoteric surfactants, e.g., amino acids, aminosulfonic acids, sulfuric or phosphoric esters of amino alcohols, and alkylbetaine type surfactants can also be used. These surfactants are described in detail in Kaimen Kasseizai Binran (Handbook of Surfactants) , Sangyo Tosho Publishing Co., Ltd. These lubricants and antistatic agents need not be 100% pure and they may contain impurities such as isomers, unreacted products, byproducts, decomposed products and oxides, in addition to their main components. However, the content of such impurities is preferably 30 mass% or less, and more preferably 10 mass% or less.

Lubricants and surfactants for use in the invention respectively have different physical functions. The kinds, amounts and combining proportions bringing about synergistic effects of these lubricants should be determined optimally in accordance with the purpose. A nonmagnetic layer and a magnetic layer can separately contain different fatty acids each having a different melting point so as to prevent bleeding out of the fatty acids to the surface, or different esters each having a different boiling point, a different melting point or a different polarity so as to prevent bleeding out of the esters to the surface. Also, the amount of the surfactant is controlled so as to improve the coating stability, or the amount of the lubricant in the intermediate layer is made larger so as to improve the lubricating effect. The examples are by no means limited thereto. In general, the total amount of lubricants is from 0.1 to 50 mass%, preferably from 2 to 25 mass%, based on the amount of the magnetic powder or the nonmagnetic powder.

All or a part of the additives to be used in the invention may be added to a magnetic coating solution or a nonmagnetic coating solution in any step of preparation. For example, additives may be blended with magnetic powder before a kneading step, may be added in a step of kneading magnetic powder, a binder and a solvent, may be added in a dispersing step, may be added after a dispersing step, or may be added just before coating. According to the purpose, there are cases of capable of attaining the object by coating all or a part of additives simultaneously with or successively after the coating of a magnetic layer. Further, according to purpose, a lubricant maybe coated on the surface of a magnetic layer after calendering treatment or after completion of slitting.

Description on solvent:

Organic solvents are used in an arbitrary rate in the invention. The examples of organic solvents include ketones, e.g., acetone, methyl ethyl ketone, methyl isobutyl ketone, diisobutyl ketone, cyclohexanone, isophorone and tetrahydrofuran; alcohols, e.g., methanol, ethanol, propanol, butanol, isobutyl alcohol, isopropyl alcohol and methylcyclohexanol; esters, e.g., methyl acetate, butyl acetate, isobutyl acetate, isopropyl acetate, ethyl lactate and glycol acetate; glycol ethers, e.g., glycol dimethyl ether, glycol monoethyl ether and dioxane; aromatic hydrocarbons, e.g., benzene, toluene, xylene, cresol and chlorobenzene; chlorinated hydrocarbons, e.g., methylene chloride, ethylene chloride, carbon tetrachloride, chloroform, ethylene chlorohydrin and dichlorobenzene; and N,N-dimethylformamide and hexane. These organic solvents need not be 100% pure and they may contain impurities such as isomers, unreactedproducts, byproducts, decomposed products, oxides and water in addition to their main components. However, the content of such impurities is preferably 30 mass% or less, and more preferably 10 mass% or less. The same kinds of organic solvents may be used in a magnetic layer and a nonmagnetic layer, but it is preferred to use organic solvents having high surface tension (e.g., cyclohexanone and dioxane) in a nonmagnetic layer to thereby increase coating stability. Specifically, it is important for the arithmetic mean value of the surface tension of the composition of the solvents in an upper layer not to be lower than the arithmetic mean value of the surface tension of the composition of the solvents in a lower layer. For improving dispersibility, the porality is preferably strong in a certain degree, and it is preferred that solvents having a dielectric constant of 15 or more account for 50 mass% or more of the composition of the solvents. The dissolution parameter of solvents is preferably from 8 to 11.

Description on layer constitution:

The support thickness of a magnetic recording medium in the invention is generally from 2 to 100 μm, preferably from 4 to 70 μm. A subbing layer may be provided between a support and a nonmagnetic or magnetic layer for adhesion improvement. The thickness of the subbing layer is from 0.01 to 0.2 μm, preferably from 0.02 to 0.5 μm. When a magnetic recording medium of the invention is used as a magnetic tape, it is preferred to provide a backing layer, and in the case of a flexible disc, the disc is preferably a disc-like medium having provided nonmagnetic layers and magnetic layers on both sides of a support, but a nonmagnetic layer and a magnetic layer may be provided only on one side of a support. In this case, a backing layer may be provided on the side of a support opposite to the side having a nonmagnetic layer and a magnetic layer for obtaining the effect of static prevention and curling correction. The thickness of the backing layer is from 0.1 to 4 $\mu$m, preferably from 0.3 to 2.0 $\mu$m. Well-known subbing layers and backing layers can be used in the invention.

The thickness of a magnetic layer in the invention is optimized by the layer constitution, the amount of saturation magnetization of the head to be used, the head gap length and the recording signal zone, but when a nonmagnetic layer is not provided, the thickness of a magnetic layer is generally from 0.1 to 5.0 $\mu$m, preferably from 0.5 to 3.0 $\mu$m, and when a nonmagnetic layer is provided, the thickness of amagnetic layer is generally from 0.01 to 1.0 $\mu$m, preferably from 0.05 to 0.5 $\mu$m, and more preferably from 1.15 to 0.35 $\mu$m. A magnetic layer may comprise two or more layers having different magnetic characteristics. When a magnetic recording medium of the invention has a magnetic layer of such a constitution, well-known multilayer magnetic layers can be applied to the invention. In this case, the thickness of a magnetic layer indicates the total thickness of these multilayer magnetic layers.

The thickness of a nonmagnetic layer of a magnetic recording medium in the present invention is generally from 0.2 to 5.0 $\mu$m, preferably from 0.5 to 3.0 $\mu$m, and more preferably from 1.0 to 2.5 $\mu$m. A nonmagnetic layer of a magnetic recording medium in the invention exhibits the effect of the invention so long as it is substantially nonmagnetic even if, or intentionally, it contains a small amount of magnetic powder as the impurity, which is as a matter of course regarded as essentially the same constitution as in the invention. The terminology "substantially nonmagnetic" means that the residual magnetic flux density of a nonmagnetic layer is 100 G or less or the coercive force is 100 Oe (8 kA/m) or less, preferably the residual magnetic flux density and the coercive force are zero

Description on support:

Well-known films such as polyesters (e.g. , polyethylene terephthalate and polyethylene naphthalate), polyolefins, cellulose triacetate, polycarbonate, polyamide, polyimide, polyamideimide, polysulfone, polyaramid, aromatic polyamide and polybenzoxazole can be used. High strong supports such as polyethylene naphthalate and polyamide are preferably used. If necessary, a lamination type support as disclosed in JP-A-3-224127 can be used to vary the surface roughness of a magnetic layer surface and a base surface. These supports may be subjected in advance to surface activation treatment, e.g., corona discharge treatment, plasma treatment, adhesion assisting treatment, heat treatment or dust-removing treatment. Aluminum or glass substrate can also be used as a support in the invention.

For attaining the object of the invention, it is preferred to use a support having a central plane average surface roughness (SRa) of 20 nm or less, preferably 10 nm or less, and more preferably 5 nm or less, measured by a surface roughness meter TOPO-3D (a product of WYKO Co.). It is preferred that the support not only has a small central plane average surface roughness but also is free from coarse spines having heights of 0.5 $\mu$m or more. Surface roughness configuration is freely controlled by the size and the amount of a filler added to a support. The examples of fillers include oxides of Ca, Si and Ti, carbonates, and acrylic-based organic powders. A support for use in the invention preferably has a maximum height (SRmax) of 1 $\mu$m or less, a ten point average roughness (SRz) of 0.5 $\mu$m or less, a central plane peak height (SRp) of 0.5 $\mu$m or less, a central plane valley depth (SRv) of 0.5 $\mu$m or less, a central plane area factor (SSr) of from 10 to 90%, and average wavelength (S$\lambda$a) of from 5 to 300 $\mu$m. For obtaining desired electromagnetic characteristics and durability, the spine distribution on the surface of a support can be controlled arbitrarily by using fillers, e.g. , the number of spines having sizes of from 0.01 to 1 $\mu$m can be controlled each within the range of from 0 to 2,000 per 0.1 mm$^2$.

Supports for use in the invention have an F-5 value of preferably from 5 to 50 kg/mm$^2$ (from 49 to 490 MPa), a thermal shrinkage factor at 100°C for 30 minutes of preferably 3% or less, more preferably 1.5% or less, a thermal shrinkage factor at 80°C for 30 minutes of preferably 1% or less, more preferably 0.5% or less, a breaking strength of from 5 to 100 kg/mm$^2$ (from 49 to 980 MPa), an elastic modulus of from 100 to 2,000 kg/mm$^2$ (from 0.98 to 19.6 GPa) , a temperature expansion coefficient of from $10^{-4}$ to $10^{-8}$/°C, preferably from $10^{-5}$ to $10^{-6}$/°C, and a humidity expansion coefficient of $10^{-4}$/RH% or less, preferably $10^{-5}$/RH% or less. These thermal characteristics, dimensional characteristics and mechanical strength characteristics are preferably almost equal in every direction of in-plane of supports with difference of not more than 10%.

Description on manufacturing method:

The manufacturing process of a magnetic coating solution anda nonmagnetic coating solution of amagnetic recordingmedium in the invention comprises at least a kneading step, a dispersing step and optionally a blending step to be carried out before and/or after the kneading and dispersing steps. Each of these steps may be composed of two or more separate stages. All of the feedstocks such as magnetic powder, nonmagnetic powder, a binder, carbon black, an abrasive, an antistatic agent, a lubricant and a solvent for use in the invention may be added at any step at any time. Each feedstock may be added at two or more steps dividedly. For example, polyurethane can be added dividedly at a kneading step, a dispersing step, or a blending step for adjusting viscosity after dispersion. For achieving the object of the invention, conventionally well-known techniques can be performed partly with the above steps. Powerful kneading machines such as an open kneader, a continuous kneader, a pressure kneader or an extruder are preferably used in a kneading step. When a kneader is used, all or a part of the binder (preferably 30% or more of the total binders) is kneaded in the range of from 15 parts to 500 parts per 100 parts of the magnetic powder or nonmagnetic powder together with the magnetic powder or nonmagnetic powder. These kneading treatments are disclosed in detail in JP-A-1-106338 and JP-A-1-79274. For dispersing amagnetic layer coating solution and a nonmagnetic layer coating solution, glass beads can be used, but dispersing media having a high specific gravity, e.g., zirconia beads, titania beads and steel beads are preferred for this purpose. Optimal particle size and packing density of these dispersing media have to be selected. Well-known dispersers can be used in the invention.

When a magnetic layer coating solution is dispersed with zirconia beads, titania beads and steel beads, the average particle size of the beads is preferably from 0.1 to 5.0 mm, more preferably from 0.5 to 3.0 mm. The dispersing time with the beads is preferably from 0.5 to 20 hours, more preferably from 1.0 to 5.0 hours.

A magnetic recording medium having a multilayer constitution is coated in the invention, a wet-on-wet coating system can be used, but successive coating coating a lower layer and drying, and then coating a magnetic layer on the lower layer is preferred for suppressing interfacial fluctuation.

For preventing the reduction of electromagnetic characteristics of a magnetic recording medium due to the agglomeration of magnetic particles, it is preferred to impart shear to the coating solution in a coating head by the methods as disclosed in JP-A-62-95174 and JP-A-1-236968. With respect to the viscosity of a coating solution, it is preferred to satisfy the range of the numeric values disclosed in JP-A-3-8471

For performing orientation perpendicularly to a magnetic layer, it is also possible to impart isotropic magnetic characteristics in the machine direction or circumferential direction using well-known methods, e.g. , with different pole andcounterpositionmagnets. Themagneticfieldoforientation is generally from 2.0 to 10 kOe (from 160 to 800 kA/m) , preferably from 3.0 to 8.0 kOe (from 240 to 640 kA/m). In orientation process, it is preferred that the drying position of a coated film be controlled by controlling the temperature and the amount of drying air and coating rate. Coating rate is preferably from 20 to 1,000 m/min and the temperature of drying air is preferably 60°C or more. Preliminary drying can be performed appropriately before entering a magnet zone.

After orientation process, a magnetic layer is generally subjected to surface treatment such as calendering. Heat resisting plastic rolls, e.g., epoxy, polyimide, polyamide and polyimideamide or metal rolls are used as rolls for calendering treatment. The treatment temperature is preferably 50°C or more, more preferably 100°C or more. The linear pressure is preferably 200 kg/cm (196 kN/m) or more, more preferably 300 kg/cm (294 kN/m) or more.

Description on physical properties:

The maximum flux density of a magnetic layer of a magnetic recording medium in the invention is generally from 80 to 300 mT, preferably from 100 to 200 mT. The coercive force (Hc) measured in the in-plane of a magnetic layer is from 1,000 to 5,000 Oe (from 80 to 400 kA/m), more preferably from 1,500 to 3,000 Oe (from 120 to 240 kA/m). The orientation ratio is preferably 0.8 or more.

Amagnetic recordingmedium in the invention has a friction coefficient against a head at temperature of -10°C to 40°C and humidity of 0% to 95% of 0.5 or less, preferably 0.3 or less, and a charge potential of preferably from -500 V to +500 V. The elastic modulus at 0.5% elongation of a magnetic layer is preferably from 100 to 2,000 kg/mm2 (from 980 to 19,600 N/mm$^2$) in every direction of in-plane, the breaking strength is preferably from 10 to 70 kg/mm$^2$ (from 98 to 686 N/mm$^2$), the elastic modulus of a magnetic recording medium is preferably from 100 to 1,500 kg/mm$^2$ (from 980 to 14,700 N/mm$^2$) in every direction of in-plane, the residual elongation is preferably 0.5% or less, and the thermal shrinkage factor at every temperature of 100°C or less is preferably 1% or less, more preferably 0.5% or less, and most preferably 0.1% or less. The glass transition temperature of a magnetic layer (the maximum point of the loss elastic modulus by dynamic viscoelasticity measurement at 110 Hz) is preferably from 50°C to 120°C, and that of a lower layer is preferably from 0°C to 100°C. The loss elastic modulus is preferably in the range of from $1 \times 10^3$ to $8 \times 10^4$ N/cm$^2$, and loss tangent is preferably 0.2 or less. When loss tangent is too large, adhesion failure is liable to occur. These thermal and mechanical characteristics are preferably almost equal in every direction of in-plane of the medium with difference of not more than 10%. The residual amount of a solvent in a magnetic layer is preferably 100 mg/m$^2$ or less, more preferably 10 mg/m$^2$ or less. The void ratio of a coated layer is preferably 30% by volume or less, more preferably 20% by volume or less, with both of a lower layer and an upper layer. The void ratio is preferably smaller for obtaining high output but in some cases a specific value should be preferably secured depending on purposes. For example, in a disc-like medium that is repeatedly used, large void ratio contributes to good running durability in many cases.

A magnetic layer surface has a central plane average surface roughness (Ra) measured with a surface roughness meter TOPO-3D (a product of WYKO Co.) of preferably 10 nm or less, more preferably 5 nm or less, and especially preferably 3 nm or less, but RMS surface roughness $R_{RMS}$ obtained by the evaluation with AFM is preferably from 2 to 15 nm. A magnetic layer preferably has a maximum height (SRmax) of 0.5 µm or less, a ten point average roughness (SRz) of 0.3 µm or less, a central plane peak height (SRp) of 0.3 µm or less, a central plane valley depth (SRv) of 0.3 µm or less, a central plane area factor (SSr) of from 20 to 80%, and average wavelength (Sλa) of from 5 to 300 µm. It is preferred to arbitrarily control the surface spines of a magnetic layer of sizes of from 0.01 to 1 µm within the range of from 0 to 2,000 to thereby optimize a friction coefficient. The surface spines can be easily controlled by the control of the surface property of a supportby using fillers, the particle size and the amount of the magnetic powders added to a magnetic layer, or by the surface configurations of the rolls of calender treatment. Curing is preferably within ±3 mm.

When a magnetic recording medium of the invention comprises a nonmagnetic layer and a magnetic layer, it can be easily presumed that these physical properties of a magnetic recording medium in the invention can be varied according to purposes in a nonmagnetic layer and a magnetic layer. For example, the elastic modulus of a magnetic layer is made higher to improve running durability and at the same time the elastic modulus of a nonmagnetic layer is made lower that that of the magnetic layer to improve the head touching of the magnetic recording medium.

In the specification of the present invention, 1 Oe is $(1/4\pi)$ kA/m, and this was converted to 0.08 kA/m. Further, 1 kg was converted to 9.8 N.

## EXAMPLES

The present invention is described in detail with reference to examples, but the invention is not limited thereto.

## EXAMPLES 1 TO 5 AND COMPARATIVE EXAMPLES 2 TO 6

Preparation of Coating Solution:

| Composition of magnetic layer-forming coating solution: | |
| --- | --- |
| Barium ferrite (average particle size: shown in Table 1) | 100 parts |
| Vinyl chloride copolymer MR110 (manufactured by Nippon Zeon Co., Ltd.) | 5 parts |
| Polyurethane resin UR8200 (manufactured by Toyobo Co., Ltd.) | 3 parts |
| Polyisocyanate Coronate L | 5 parts |
| α-Alumina HIT55 (manufactured by Sumitomo Chemical Co., Ltd.) | 5 parts |
| Carbon black #50 (manufactured by ASAHI CARBON CO., LTD.) | 1 part |
| Phenylphosphonic acid | 2 parts |
| Butyl stearate | 1 part |
| Butoxyethyl stearate | 1 part |
| Isohexadecyl stearate | 1 part |
| Stearic acid | 2 parts |
| Methyl ethyl ketone | 125 parts |
| Cyclohexanone | 125 parts |

| Composition of nonmagnetic layer-forming coating solution: | |
| --- | --- |
| Nonmagnetic powder, Ti02, crystal system rutile Average particle size: 0.035 µm, Specific surface area by BET method: 40 m$^2$/g, pH: 7 | 80 parts |

(continued)

| Composition of nonmagnetic layer-forming coating solution: | |
|---|---|
| TiO$_2$ content: 90% or more<br>    DBP oil absorption amount: 27 to 38 ml/100 g,<br>    Surface-covering compound: treatment with<br>    8 mass% of Al$_2$O$_3$ | |
| Carbon black (shown in Table 1)<br>    CONDUCTEX CS-U (manufactured by Columbia Carbon Co., Ltd.) | |
| Vinyl chloride copolymer<br>    MR-110 (manufactured by Nippon Zeon Co., Ltd.) | 12 parts |
| Polyurethane resin<br>    UR8200 (manufactured by Toyobo Co., Ltd.) | 5 parts |
| Polyisocyanate<br>    Coronate L | 15 parts |
| Butyl stearate | 5 parts |
| Butoxyethyl stearate | 1 part |
| Isohexadecyl stearate | 1 part |
| Stearic acid | 3 parts |
| Methyl ethyl ketone/cyclohexanone<br>    (8/2 mixed solvent) | 250 parts |

With each of the above compositions of the magnetic layer coating solution and the nonmagnetic layer coating solution, components were kneaded in a kneader and then dispersed in a sand mill, and solutions were filtered through a filter having an average pore diameter of 1 pm, thereby a nonmagnetic layer coating solution and a magnetic layer coating solution were prepared.

The thus-obtained nonmagnetic layer-coating solution was coated on a PET support having a thickness of 7 μm and a central line surface roughness of the magnetic layer-coating plane of 3 nm in a dry thickness of 1.5 μm, and then the magnetic layer-coating solution was coated on the nonmagnetic layer in the thickness as shown in Table 1. While both layers were still wet, the layers were subjected to perpendicular orientation by passing through coating magnetic field perpendicular intensity of 300 mT. After drying, the layers were subjected to calendering process with calenders of seven stages at 90°C and linear pressure of 294 kN/m. Thereafter, a backing layer was coated on a dry thickness of 0.5 μm. The obtained web was slit to a width of 1/2 inches, thereby a magnetic tape was obtained.

COMPARATIVE EXAMPLE 1

A magnetic tape was obtained in the same manner as in Example 1 except that orientation process was not performed.

The characteristics of each tape obtained above were measured as follows.

(1) Magnetic layer, backing layer and lower layer thickness:

An ultrathin section of each sample was observed and photographed with a transmission electron microscope. The thickness of each layer was obtained by compensating for the magnification of each photograph.

(2) Electromagnetic characteristics:

Measurement was performed by head fixing type 1/2 inch linear system. Head/tape relative velocity was 10 m/sec. Recording was performed with saturation magnetization of 1. 4T MIG head (gap length: 0.2 μm, track width: 18 μm), and recording current was set at optimal recording current of each tape. As the reproduction head, an anisotropic MR head (A-MR) having an element thickness of 25 nm and a shield distance of 0.2 μm.

[1] S/N: Signal of recording wavelength of 0.2 μm was recorded and the reproduced signal was analyzed by frequency with a spectrum analyzer (manufactured by Shiba Soku Co., Ltd.). The ratio of the output of carrier signal (wavelength: 0.2 μm) to the integrated noise in the entire spectrum band was taken as S/N ratio.

(3) Surface electrical resistance (Rs) of magnetic layer surface:

IEC type Rs measuring jig was used. Measurement was performed with digital hyper insulation resistance tester TR-811A (1/2 inch width) (manufactured by Takeda Riken Co.) at voltage of 50 V.

The results obtained are shown in Table 1 below

**TABLE 1**

| | Average Tabular Size (nm) | Volume of Magnetic Flux Revolution (nm³) | SQp | Magnetic Layer Thickness (µm) | Amount of Carbon Black in Lower Layer (parts) | Surface Electrical Resistance (Ω/sq) | S/N (dB) |
|---|---|---|---|---|---|---|---|
| Example 1 | 35 | 10,000 | 0.8 | 0.1 | 10 | 1.00E+07 | 4 |
| Example 2 | 20 | 3,000 | 0.7 | 0.1 | 10 | 5.00E+07 | 6 |
| Example 3 | 45 | 15,000 | 0.6 | 0.1 | 10 | 7.00E+06 | 2 |
| Example 4 | 35 | 10,000 | 0.8 | 0.01 | 10 | 5.00E+07 | 4 |
| Example 5 | 35 | 10,000 | 0.8 | 0.15 | 10 | 9.00E+06 | 4.5 |
| Comparative Example 1 | 35 | 10,000 | 0.5 | 0.1 | 10 | 1.00E+07 | -4 |
| Comparative Example 2 | 15 | 2,000 | 0.8 | 0.1 | 10 | 6.00E+07 | -1 |
| Comparative Example 3 | 50 | 20,000 | 0.8 | 0.1 | 10 | 3.00E+06 | -2 |
| Comparative Example 4 | 35 | 10,000 | 0.8 | 0.001 | 10 | 7.00E+07 | -4 |
| Comparative Example 5 | 35 | 10,000 | 0.8 | 0.2 | 10 | 2.00E+06 | 1 |
| Comparative Example 6 | 35 | 10,000 | 0.8 | 0.1 | 3 | 1.00E+10 | Measurement impossible. |

In Table 1, in the column of "Surface Electrical Resistance", 1.00E+07 means $1.00\times10^{+7}$ (others are also the same). In Comparative Example 6, measurement was impossible due to static electricity.

From the results in Table 1, it can be seen that the samples in Examples are superior to Comparative Examples in S/N ratio.

The present invention can provide a magnetic recording medium excellent in electromagnetic characteristics by a magnetic recording medium comprising a support having provided thereon a magnetic layer containing ferromagnetic powder, wherein the magnetic layer has a volume of magnetic flux revolution of from 3,000 to 15,000 $nm^3$, a thickness of from 0.01 to 0.15 μm, a squareness ratio in the perpendicular direction of 0.7 or more, and a surface electrical resistance (Rs) of $10^8$ Ω/sq or less.

This application is based on Japanese Patent application JP 2003-127197, filed May 2, 2003, the entire content of which is hereby incorporated by reference, the same as if set forth at length.

**Claims**

1. A magnetic recording medium comprising a support and a magnetic layer containing a ferromagnetic powder, wherein the magnetic layer has a volume of magnetic flux revolution of from 3,000 to 15,000 $nm^3$, a thickness of from 0.01 to 0.15 μm, a squareness ratio in a perpendicular direction of 0.7 or more, and a surface electrical resistance of $10^8$ Ω/sq or less.

2. The magnetic recording medium according to claim 1, wherein the volume of magnetic flux revolution is from 3,000 to 10,000 $nm^3$.

3. The magnetic recording medium according to claim 1, wherein the thickness is from 0.05 to 0.1 μm.

4. The magnetic recording medium according to claim 1, wherein the squareness ratio in a perpendicular direction is 0.8 or more.

5. The magnetic recording medium according to claim 1, wherein the surface electrical resistance is from $10^4$ to $10^6$ Ω/sq.

6. The magnetic recording medium according to claim 1, wherein the ferromagnetic powder is a hexagonal ferrite powder having an average tabular diameter of from 20 to 60 nm.

7. The magnetic recording medium according to claim 1, wherein the ferromagnetic powder is a ferromagnetic metal powder having an average long axis length of from 20 to 100 nm.

8. The magnetic recording medium according to claim 1, wherein the ferromagnetic powder is a ferromagnetic metal powder having an average long axis length of from 30 to 70 nm.

9. The magnetic recording medium according to claim 7, the rerromagnetic metal powder has a saturation magnetization of from 80 to 140 $A\cdot m^2/kg$.